# EUROPÄISCHE PATENTSCHRIFT

(11) **EP 2 143 516 B1**
(45) Veröffentlichungstag und Bekanntmachung des Hinweises auf die Patenterteilung: **16.05.2012**
(21) Anmeldenummer: 09005201.0
(22) Anmeldetag: 09.04.2009
(51) Int. Cl.: B23D 45/02, B23D 45/10, B27G 19/10

(54) **Sägeaggregat für vertikale Plattensäge**
Saw assembly for vertical panel-saw
Ensemble de sciage pour une scie à panneaux verticale

(30) Priorität: 10.07.2008 DE 102008033377
(43) Veröffentlichungstag der Anmeldung: 13.01.2010
(73) Patentinhaber: HOLZ-HER GmbH, 72622 Nürtingen (DE)
(72) Erfinder: Lorber, Denis, 72663 Grossbettlingen (DE); Maiero, Fritz, 72636 Frickenhausen (DE)
(74) Vertreter: Hoeger, Stellrecht & Partner Patentanwälte

(56) Entgegenhaltungen:
- EP-A1- 0 455 592
- DE-A1- 3 214 219

## Beschreibung

Die Erfindung betrifft ein Sägeaggregat für eine vertikale Plattensäge, mit mindestens einem Tragteil, an dem ein drehend antreibbares Hauptsägeblatt drehbar gelagert ist, und mit einem relativ zum Hauptsägeblatt versetzbaren, drehend antreibbaren Vorritz-Sägeblatt sowie mit einem an das zu sägende Werkstück gleitend anlegbaren Druckschuh, der eine spaltförmige Öffnung zum Durchtritt des Hauptsägeblattes und des Vorritz-Sägeblattes aufweist und der relativ zum Tragteil verschiebbar ist.

Ein derartiges Sägeaggregat ist beispielsweise aus der EP 0 455 592 A1 bekannt. Mit seiner Hilfe kann ein plattenförmiges Werkstück, beispielsweise eine Spanplatte, zerteilt werden. Das Sägeaggregat kann in üblicher Weise an einem Sägebalken der vertikalen Plattensäge verschiebbar gehalten sein. In Sägerichtung vor dem Hauptsägeblatt ist das Vorritz-Sägeblatt angeordnet, dessen Drehrichtung der Drehrichtung des Hauptsägeblattes entgegengerichtet ist. Dies gibt die Möglichkeit, mittels des Vorritz-Sägeblattes eine Sägespur in das Werkstück einzufräsen, so dass dann anschließend innerhalb der Sägespur das Werkstück mit Hilfe des Hauptsägeblattes durchtrennt werden kann, ohne dass die Gefahr besteht, dass die Schnittkanten beim Durchsägen des Werkstückes mittels des Hauptsägeblattes ausbrechen. Ein unsauberer Sägeschnitt wird dadurch vermieden. Das Vorritz-Sägeblatt weist hierbei eine Breite auf, die die Breite des Hauptsägeblattes geringfügig übersteigt. Vorritz-Sägeblatt und Hauptsägeblatt sind fluchtend zueinander angeordnet.

Um einen sauberen Sägeschnitt zu erreichen, ist es wünschenswert, dass das Vorritz-Sägeblatt unabhängig von der Dicke des Werkstückes eine gleich bleibende Eindringtiefe aufweist. Es ist deshalb relativ zum Hauptsägeblatt versetzbar angeordnet. In der EP 0 455 592 A1 wird hierzu ein verschwenkbarer Support vorgeschlagen, der nach Art eines zweiarmigen Hebels ausgebildet ist. Der Hebel ist an der Abtriebswelle eines das Hauptsägeblatt antreibenden Elektromotors verschwenkbar gelagert und wirkt am freien Ende seines kürzeren Hebelarms mit einer Zugfeder zusammen. Dem freien Ende des längeren Hebelarms benachbart ist das Antriebsritzel des Vorritz-Sägeblattes angeordnet. Mittels der Zugfeder wird das Vorritz-Sägeblatt in Richtung auf das zu sägende Werkstück bewegt. Ein Anschlag, der innenseitig an einem Druckschuh angeordnet ist, stellt sicher, dass das Vorritz-Sägeblatt eine vorgegebene Stellung relativ zur Gleitfläche des Druckschuhs einnimmt. Gleichzeitig wird durch die Federbelastung des Anschlages der Druckschuh in Richtung des zu sägenden Werkstückes gedrückt. Der in Form einer zweiarmigen Hebels ausgestaltete Support lagert somit das Vorritz-Sägeblatt und drückt gleichzeitig den Druckschuh in Richtung auf das zu sägende Werkstück. Hierbei wirken allerdings erhebliche Kippmomente auf den Druckschuh und dessen Lagerung. Dies kann dazu führen, dass der Druckschuh verkantet. Dies wiederum kann eine ungleichmäßige Eindringtiefe des Vorritz-Sägeblattes zur Folge haben.

Aufgabe der vorliegenden Erfindung ist es, ein Sägeaggregat der gattungsgemäßen Art derart weiterzubilden, dass die Gefahr einer ungeichmäßigen Eindringtiefe des Vorritz-Sägeblattes vermindert wird.

Diese Aufgabe wird durch ein Sägeaggregat mit den Merkmalen des Anspruchs 1 gelöst.

Beim erfindungsgemäßen Sägeaggregat kommt eine gemeinsame Linearführung für das Vorritz-Sägeblatt und den Druckschuh zum Einsatz. Diese ermöglicht es, das Vorritz-Sägeblatt zusammen mit dem Druckschuh relativ zum Tragteil linear zu verschieben. Dadurch kann die Lage des Vorritz-Sägeblattes und des Druckschuhs an die Dicke des jeweils zu sägenden Werkstückes angepasst werden. Die lineare Verschiebbarkeit des Vorritz-Sägeblattes zusammen mit dem Druckschuh verringert die Gefahr, dass der Druckschuh verkantet. Selbst bei unterschiedlichen Werkstückdicken kann zuverlässig eine gleich bleibende Eindringtiefe und damit eine besonders saubere Schnittkante erzielt werden.

Von Vorteil ist es, wenn das Vorritz-Sägeblatt und der Druckschuh relativ zueinander bewegbar sind. Dies gibt die Möglichkeit, das Vorritz-Sägeblatt zwischen einer ersten Stellung, in der es aus der spaltförmigen Öffnung des Druckschuhs nach vorne herausragt und damit in das zu sägende Werkstück eindringt, und einer zweiten Stellung, in der es gegenüber der Gleitfläche des Druckschuhs zurückgesetzt ist, hin und her zu bewegen. Damit kann der Benutzer entscheiden, ob er bei Einsatz des Sägeaggregates das zu sägende Werkstück vorritzt oder ob er ohne Einsatz des Vorritz-Sägeblattes einen Trennschnitt mittels des Hauptsägeblattes vornimmt. Außerdem ermöglicht es die Bewegbarkeit des Vorritz-Sägeblattes relativ zum Druckschuh, die Eindringtiefe des Vorritz-Sägeblattes einzustellen.

Bevorzugt ist der Druckschuh relativ zum Vorritz-Sägeblatt linear verschiebbar. Dies ermöglicht eine sehr präzise Relativbewegung zwischen den beiden Bauteilen und damit eine exakte Justierung der Eindringtiefe des Vorritz-Sägeblatts.

Die gemeinsame Linearführung für das Vorritz-Sägeblatt und den Druckschuh umfasst vorzugsweise eine Führungsschiene, beispielsweise eine Profilschiene oder auch eine im Querschnitt runde oder ovale Schiene, in Kombination mit mindestens einem Führungsschuh oder Führungswagen, der komplementär zur Führungsschiene ausgestaltet ist. Hierbei kann vorgesehen sein, dass die Führungsschiene starr mit dem Tragteil des Sägeaggregates verbunden ist und der mindestens eine Führungsschuh oder Führungswagen, verbunden mit dem Vorritzsägeaggregat, an der Führungsschiene entlang gleitet. Es hat sich allerdings als vorteilhaft erwiesen, wenn der Führungsschuh oder Führungswagen ortfest am Tragteil gehalten ist und die Führungsschiene verschiebbar ist. Günstig ist es, wenn mindestens zwei, im Abstand zueinander angeordnete Führungsschuhe oder Führungswagen zum Einsatz kommen.

Bei einer bevorzugten Ausgestaltung weist das Sägeaggregat ein erstes Antriebsorgan auf zum Verschieben des Vorritz-Sägeblattes zusammen mit dem Druckschuh relativ zum Tragteil. Das erste Antriebsorgan kann beispielsweise in Form eines federelastischen Elementes ausgebildet sein, das das Vorritz-Sägeblatt zusammen mit dem Druckschuh mit einer Federkraft in Richtung der Oberfläche des zu sägenden Werkstückes beaufschlagt.

Günstig ist es, wenn das erste Antriebsorgan ein Kolben-Zylinderaggregat aufweist. Dies ermöglicht es, das Vorritz-Sägeblatt zusammen mit dem Druckschuh pneumatisch oder hydraulisch zu verschieben. Durch Beaufschlagung des Kolben-Zylinderaggregates mit einem unter Druck stehenden Medium, beispielsweise mit Druckluft, kann somit das Vorritz-Sägeblatt zusammen mit dem Druckschuh relativ zum Tragteil verschoben werden.

Um den Druckschuh relativ zum Vorritz-Sägeblatt zu bewegen, weist das Sägeaggregat bei einer vorteilhaften Ausführungsform der Erfindung ein zweites Antriebsorgan auf.

Das zweite Antriebsorgan ist bevorzugt als Kolben-Zylinderaggregat ausgestaltet, das pneumatisch oder hydraulisch beaufschlagbar ist.

Bevorzugt sind das erste Antriebsorgan und/oder das zweite Antriebsorgan elektrisch oder mittels eines Druckmittels, insbesondere pneumatisch, steuerbar. Es kann beispielsweise vorgesehen sein, dass das erste Antriebsorgan und/oder das zweite Antriebsorgan in Form eines Elektromotors, insbesondere eines Stellmotors ausgestaltet sind. Dies gibt die Möglichkeit, das erste und/oder das zweite Antriebsorgan elektrisch zu steuern. Alternativ kann beispielsweise eine pneumatische Steuerung des ersten und/oder des zweiten Antriebsorgans zum Einsatz kommen.

Um die Eindringtiefe des Vorritzsägeaggregates sehr präzise einstellen zu können, ist bei einer bevorzugten Ausführungsform vorgesehen, dass das Sägeaggregat ein Stellorgan aufweist. Mittels des Stellorgans kann die Eindringtiefe des Vorritz-Sägeblattes in das zu sägende Werkstück eingestellt werden.

Es kann vorgesehen sein, dass das Stellorgan elektrisch, pneumatisch oder hydraulisch betätigbar ist.

Alternativ kann vorgesehen sein, dass das Stellorgan manuell betätigbar ist.

Bevorzugt umfasst das Stellorgan einen mechanisch verstellbaren Anschlag. Der Anschlag kann die Relativbewegung zwischen dem Druckschuh und dem Vorritz-Sägeblatt begrenzen.

Als Anschlag kann beispielsweise ein Stellbolzen oder eine Stellschraube zum Einsatz kommen.

Besonders günstig ist es, wenn der verstellbare Anschlag auf der dem Werkstück zugewandten Seite des Sägeaggregates manuell verstellbar ist. Dies erleichtert die Einstellung der Eindringtiefe des Vorritz-Sägeblattes. Es kann beispielsweise vorgesehen sein, dass der Anschlag mittels einer Stellschraube verstellbar ist, die einen Innensechskant aufweist, so dass der Benutzer die Stellschraube mittels eines komplementär ausgestalteten Steckschlüssels zur Einstellung der Eindringtiefe des Vorritz-Sägeblattes verdrehen kann.

Das Hauptsägeblatt und das Vorritz-Sägeblatt können bei einer bevorzugten Ausführungsform von einem gemeinsamen Antriebsmotor, insbesondere einem Elektromotor angetrieben werden. Es kann allerdings auch vorgesehen sein, dass das Hauptsägeblatt und das Vorritz-Sägeblatt mittels separater Motoren, insbesondere mittels separater Elektromotoren, drehend antreibbar sind.

Bevorzugt weist das Sägeaggregat ein Vorritzaggregat auf, das das Vorritz-Sägeblatt sowie einen das Vorritz-Sägeblatt drehend antreibenden Elektromotor aufweist und mittels der gemeinsamen Linearführung zusammen mit dem Druckschuh verschiebbar am Tragteil gehalten ist.

Das Tragteil kann mindestens einen Tragbügel aufweisen, der beispielsweise C- oder U-förmig ausgestaltet ist. Der mindestens eine Tragbügel kann das Vorritzaggregat umgreifen und einen Führungsschuh oder -wagen umfassen, der eine starr mit dem Vorritzaggregat verbundene Führungsschiene verschiebbar lagert. Selbstverständlich kann auch eine umgekehrte Anordnung zum Einsatz kommen dergestalt, dass die Führungsschiene ortsfest an dem mindestens einen Tragbügel gehalten ist und der mindestens eine Führungsschuh oder -wagen starr mit dem Vorritzaggregat verbunden ist.

Der Druckschuh ist bei einer bevorzugten Ausführungsform bewegbar, insbesondere linear verschiebbar am Vorritzaggregat und günstigerweise auch an einem Gehäuse des Sägeaggregates gelagert. Der Druckschuh kann zur Anlage an das zu sägende Werkstück eine ebene Gleitfläche aufweisen, an die sich in Sägerichtung und entgegen der Sägerichtung schräg zur Gleitfläche ausgerichtete Auflaufflächen anschließen. Außerdem kann der Druckschuh senkrecht zur Gleitfläche ausgerichtete Führungsglieder umfassen, die mit korrespondierenden Führungsgliedern zusammenwirken, welche innenseitig an einem Gehäuse des Sägeaggregates angeordnet sind. Dies ermöglicht eine verschiebliche Lagerung des Druckschuhs am Gehäuse des Sägeaggregates, und mittels des zweiten Antriebsorgans des Sägeaggregates kann der Druckschuh relativ zum Vorritzaggregat bewegt, insbesondere verschoben werden.

Die nachfolgende Beschreibung einer bevorzugten Ausführungsform der Erfindung dient im Zusammenhang mit der Zeichnung der näheren Erläuterung. Es zeigen:
- Figur 1:: eine perspektivische Darstellung einer vertikalen Plattensäge mit einem verschiebbar an einem Sägebalken gehalten Sägeaggre- gat;
- Figur 2:: eine perspektivische Darstellung des Sägeaggregates aus Figur 1;
- Figur 3:: eine teilweise aufgebrochene Seitenansicht des Sägeaggregates im Abstand zu einem zu sägenden Werkstück;
- Figur 4:: eine teilweise aufgebrochene Seitenansicht des Sägeaggregates beim Sägen des Werkstückes ohne Vorritzen und
- Figur 5:: eine teilweise aufgebrochene Seitenansicht des Sägeaggregates beim Sägen eines Werkstückes mit Vorritzen.

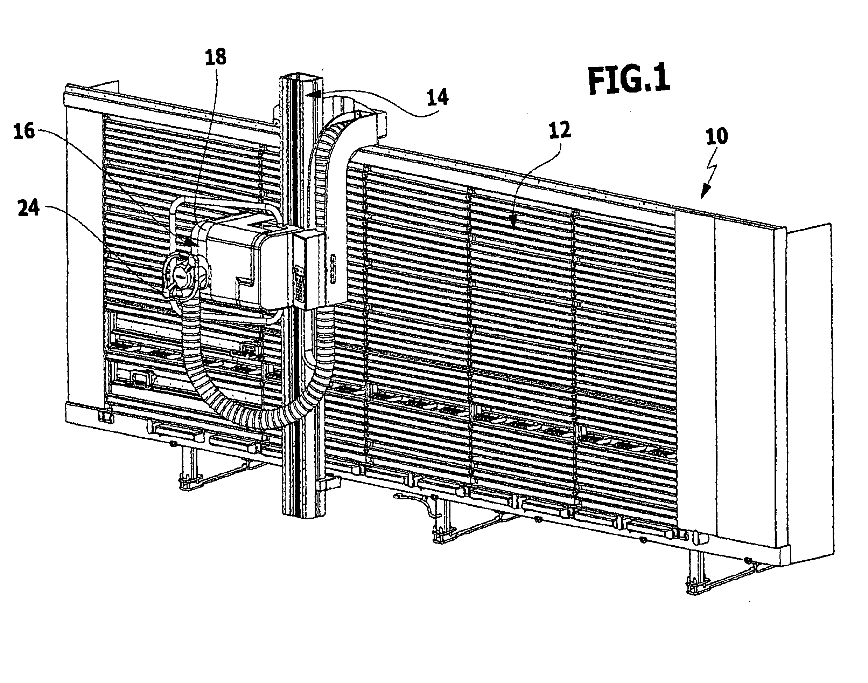

In Figur 1 ist schematisch eine vertikale Plattensäge 10 dargestellt mit einem Stützrost 12, an dem ein zu sägendes plattenförmiges Werkstück, beispielsweise eine Spanplatte, angeordnet werden kann. Vor dem Stützrost 12 ist ein Stützbalken 14 positioniert, der in Längsrichtung des Stützrostes 12 an diesem entlang verschoben werden kann und der eine Führung ausbildet für ein Sägeaggregat 16, das längs des Stützbalkens 14 verfahrbar an diesem gelagert ist.

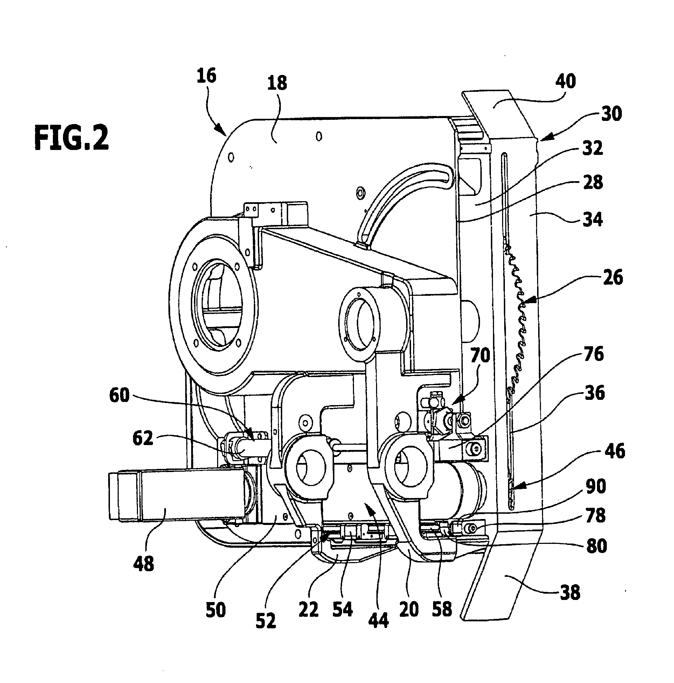

Das Sägeaggregat 16 ist in den Figuren 2 bis 5 vergrößert dargestellt. Es umfasst ein haubenartiges Gehäuse 18, das an einem ersten Tragteil in Form eines vorderen Tragbügels 20 und einem zweiten Tragteil in Form eines hinteren Tragbügels 22 gehalten ist. Die beiden Tragbügel 20 und 22 sind verschwenkbar an einer in der Zeichnung nicht dargestellten Halteeinrichtung gelagert und können mittels eines Schwenkrades 24 zwischen einer ersten, in Figur 1 dargestellten Stellung, in der das Gehäuse 18 im Wesentlichen vertikal ausgerichtet ist, und einer um 90° verschwenkten Stellung, in der das Gehäuse 18 im Wesentlichen horizontal ausgerichtet ist, hin und her verschwenkt werden.

Ein Hauptsägeblatt 26 ist im Gehäuse 18 drehbar gelagert und kann über an sich bekannte, in der Zeichnung nicht dargestellte Getriebeelemente, beispielsweise einen Riementrieb, von einem seitlich an das Gehäuse 18 anflanschbaren Elektromotor drehend angetrieben werden. Der Elektromotor ist zur Erzielung einer besseren Übersicht in der Zeichnung ebenfalls nicht dargestellt.

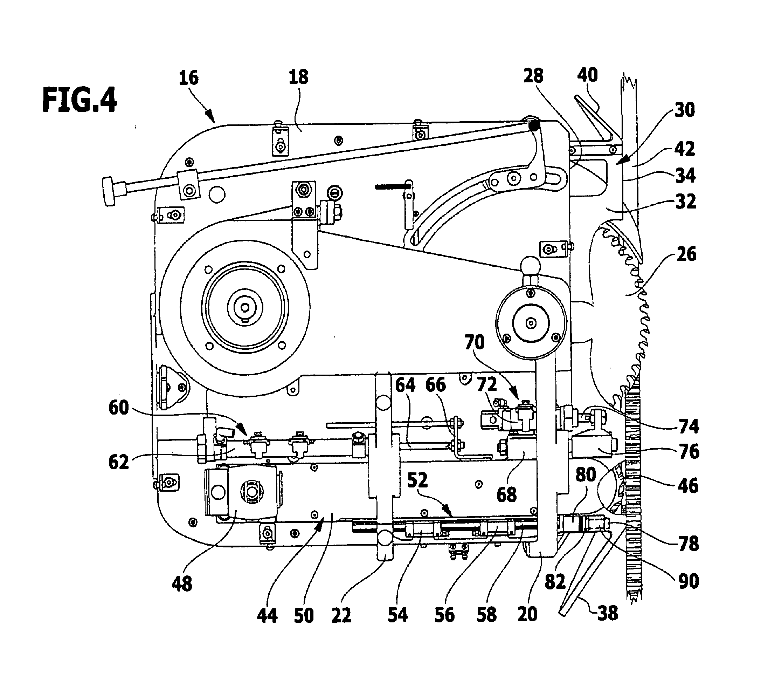

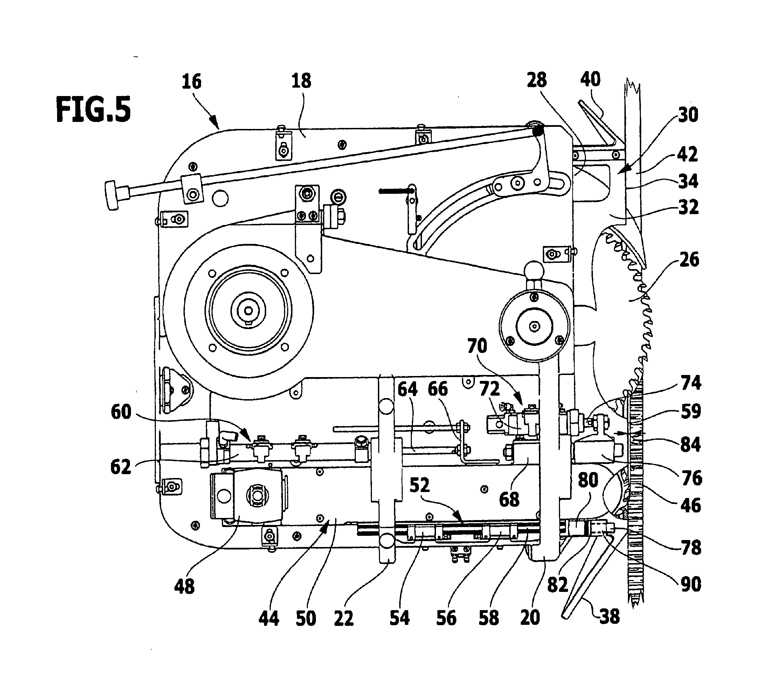

Das Hauptsägeblatt 26 ragt über einen Stirnrand 28 des Gehäuses 18 hervor, der dem Stützrost 12 zugewandt ist. In das Gehäuse 18 taucht ein Druckschuh 30 mit einem komplementär zum Gehäuse 18 geformten Mantelabschnitt 32 ein, der im Gehäuse 18 senkrecht zu der vom Stützrost 12 definierten Stützebene verschiebbar gelagert ist. Frontseitig wird der Mantelabschnitt 32 von einer ebenen Gleitfläche 34 des Druckschuhs 30 überdeckt, die eine spaltförmige Öffnung 36 aufweist und an die sich in Längsrichtung der spaltförmigen Öffnung 36 schräg zur Gleitfläche 34 einerseits eine Auflauffläche 38 und andererseits eine Ablauffläche 40 anschließen. Wie aus den Figuren 4 und 5 deutlich wird, kann die Gleitfläche 34 an das zu sägende Werkstück 42 angelegt werden.

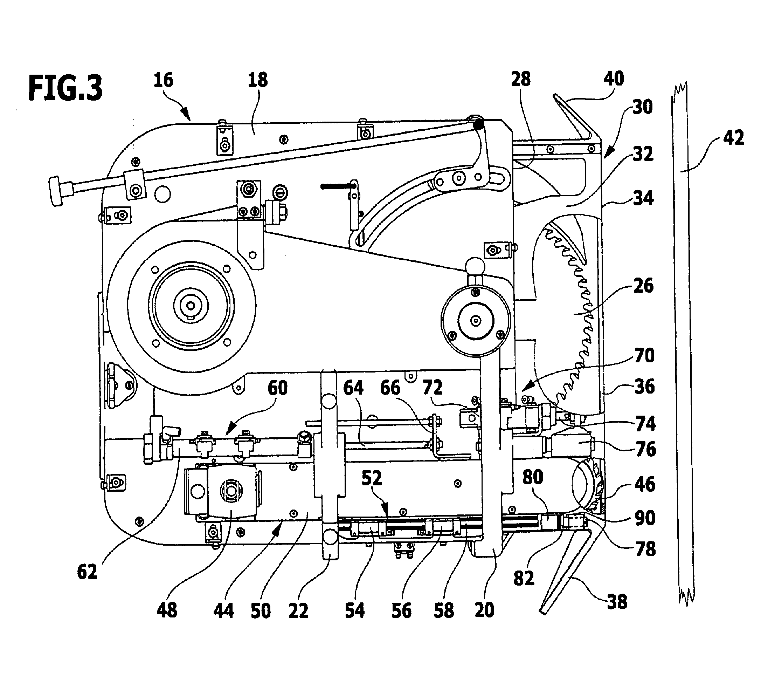

Der Druckschuh 30 ist zwischen einer vorderen, in Figur 3 dargestellten Stellung, in der er den stirnseitig aus dem Gehäuse 18 herausragenden Abschnitt des Hauptsägeblattes 26 vollständig umgibt, und hinteren Endstellungen, die in den Figuren 4 und 5 dargestellt sind und in denen das Hauptsägeblatt 26 die spaltförmige Öffnung 36 zum Sägen eines Werkstückes 42 durchgreift, hin und her verschiebbar.

Das Sägeaggregat 16 umfasst darüber hinaus ein Vorritzaggregat 44 mit einem Vorritz-Sägeblatt 46, das über an sich bekannte und deshalb in der Zeichnung nicht dargestellte Getriebeelemente mit einem Elektromotor 48 gekoppelt ist und von diesem drehend antreibbar ist. Das Vorritzaggregat 44 weist ein Vorritzgehäuse 50 auf, das die genannten Getriebeelemente zur Kopplung des Elektromotors 48 mit dem Vorritz-Sägeblatt 46 aufnimmt und das über eine Linearführung 52 senkrecht zu der durch den Stützrost 12 definierten Stützebene verschiebbar an den Tragbügeln 20 und 22 gehalten ist. Die Linearführung 52 weist zwei im Abstand und fluchtend zueinander angeordnete Führungsschuhe 54, 56 auf, die starr mit den Tragbügeln 20 und 22 verbunden sind und eine profilierte Führungsschiene 58 verschiebbar lagern. Die Führungsschiene 58 ist starr mit dem Vorritzgehäuse 50 gekoppelt.

Das Vorritz-Sägeblatt 46 ist fluchtend zum Hauptsägeblatt 26 ausgerichtet und kann in der in Figur 5 dargestellten hinteren Endstellung des Druckschuhs 30 in entsprechender Weise wie das Hauptsägeblatt 26 die spaltförmige Öffnung 36 der Gleitfläche 34 durchgreifen. Die Drehrichtung des Vorritz-Sägeblatts 46 ist der Drehrichtung des Hauptsägeblattes 26 entgegengesetzt. Dies gibt die Möglichkeit, bei Vornahme eines Trennschnittes in das Werkstück 42 zuerst mittels des Vorritz-Sägeblattes 46 eine Sägespur 59 einzufräsen, deren Breite diejenige des Hauptsägeblattes 26 geringfügig übersteigt, und anschließend kann innerhalb der Sägespur 59 mittels des Hauptsägeblattes 26 das Werkstück 42 durchtrennt werden. Dadurch kann ein sauberer Trennschnitt erzielt werden, ohne dass die Gefahr besteht, dass die Schnittkanten aufbrechen.

Das Vorritzaggregat 44 ist mittels eines ersten Antriebsorgans in Längsrichtung der Führungsschiene 58 verschiebbar. Das erste Antriebsorgan ist als pneumatisches Kolben-Zylinderaggregat 60 ausgestaltet mit einem ortsfest am Gehäuse 18 des Sägeaggregates 16 gehaltenen Zylinder 62, der mit Druckluft beaufschlagbar ist und aus dem eine Kolbenstange 64 herausragt, die an ihrem freien Ende mit einem oberseitig vom Vorritzgehäuse 50 abstehenden Haltewinkel 66 verbunden ist.

Das erste Kolben-Zylinderaggregat 60 weist eine Druckfeder auf, die einen im Zylinder 62 verschiebbaren Kolben mit einer Federkraft beaufschlagt. Am Kolben ist die aus dem Zylinder herausragende Kolbenstange 64 gehalten, mit deren Hilfe das Vorritzaggregat 44 zusammen mit dem Druckschuh 30 verschoben werden kann. Und zwar trägt das Vorritzgehäuse 50 auf seiner Oberseite fluchtend zum Kolben-Zylinderaggregat 60 einen Stützblock 68, auf dem ein zweites Antriebsorgan in Form eines zweiten pneumatischen Kolben-Zylinderaggregates 70 gehalten ist. Über das zweite Kolben-Zylinderaggregat 70 ist das Vorritzaggregat 44 mit dem Druckschuh 30 gekoppelt. Hierzu weist das zweite Kolben-Zylinderaggregat 70 einen mit Druckluft beaufschlagbaren Zylinder 72 auf, der starr mit dem Stützblock 68 verbunden ist und aus dem eine Kolbenstange 74 herausragt, die an ihrem freien Ende über einen Halteblock 76 mit dem Druckschuh 30 verbunden ist.

Die Kopplung des Vorritzaggregates 44 über das zweite Kolben-Zylinderaggregat mit dem Druckschuh 30 ermöglicht es, das Vorritzaggregat 44 zusammen mit dem Druckschuh 30 längs der gemeinsamen Linearführung 52 relativ zu den beiden Tragbügeln 20, 22 zu verschieben.

Abhängig von der Lage, die das Vorritz-Sägeblatt 46 relativ zur Gleitfläche 34 des Druckschuhs 30 einnimmt, kann am Werkstück 42 entweder ein Trennschnitt angebracht werden, ohne dass das Vorritz-Sägeblatt eine Sägespur vorfräst, wie dies in Figur 4 dargestellt ist, oder aber ein Trennschnitt mit zuvor eingefräster Sägespur 59, wie dies Figur 5 zeigt. In Figur 4 nimmt das Vorritz-Sägeblatt 46 relativ zum Druckschuh 30 eine Position ein, in der es die spaltförmige Öffnung 36 der Gleitfläche 34 nicht durchgreift und somit das Werkstück 42 nicht erreicht. Mittels des Kolben-Zylinderaggregates 70 kann der Druckschuh 30 relativ zum Vorritz-Sägeblatt aber auch derart verschoben werden, dass das Vorritz-Sägeblatt 46 die spaltförmige Öffnung 36 durchgreift, wie dies in Figur 5 dargestellt ist. Dies gibt dann die Möglichkeit, bei Vornahme eines Trennschnittes das Werkstück 42 zunächst mittels des Vorritz-Sägeblattes vorzufräsen, bevor dann mittels des Hauptsägeblattes 26 der Trennschnitt vorgenommen wird.

Die Lage des Vorritz-Sägeblattes 46 relativ zur Gleitfläche 34 des Druckschuhs 30 in der hinteren Endstellung des Druckschuhs 30 und damit die Eindringtiefe des Vorritz-Sägeblattes 46 in das Werkstück 42 ist mittels eines Stellorgans in Form einer Stellschraube 78 manuell einstellbar. Die Stellschraube 78 ist fluchtend zur Führungsschiene 58 der Linearführung 52 angeordnet und in eine Gewindebohrung einer am Vorritzgehäuse 50 festgelegten Gewindehülse 80 eingeschraubt. In Längsrichtung ungefähr mittig umfasst die Stellschraube 78 einen Bereich vergrößerten Durchmessers, der einen Anschlag 82 ausbildet für einen Ausleger 90, der am Druckschuh 30 festgelegt ist und eine durchgehende Passbohrung aufweist, in welcher der Schraubenkopf der Stellschraube 78 gleitet. Wird der Druckschuh 30 mittels des zweiten Kolben-Zylinderaggregates 70 in Richtung des Vorritzgehäuses 50 verschoben, so schlägt der Ausleger 90 mit seiner der Gewindehülse 80 zugewandten Stirnseite gegen den bundförmigen Anschlag 82, dessen Lage durch mehr oder weniger tiefes Einschrauben der Stellschraube 78 in die Gewindehülse 80 verändert werden kann. Mittels der Stellschraube 78 kann somit die Lage des Vorritz-Sägeblattes 46 relativ zur Gleitfläche 34 und damit die in Figur 5 veranschaulichte Eindringtiefe 84 vorgegeben werden.

Das Sägeaggregat 16 ist in Figur 3 im Abstand zu einem zu sägenden Werkstück 42 dargestellt. Hierbei wird der Druckschuh 30 mittels des ersten Kolben-Zylinderaggregates 60 und des zweiten Kolben-Zylinderaggregates 70 zusammen mit dem Vorritzaggregat 44 so weit nach vorne, d. h. in Richtung des Werkstückes 42 verschoben, dass der Druckschuh 30 seine vordere Endstellung einnimmt, in der er das Hauptsägeblatt 26 und das Vorritz-Sägeblatt 46 vollständig überdeckt.

Wird das Sägeaggregat 46 auf den Stützrost aufgesetzt und trifft anschließend das zu sägende Werkstück auf die Auflauffläche 38, so wird der Druckschuh 30 zusammen mit dem Vorritzaggregat 44 so weit nach hinten verschoben, dass das Hauptsägeblatt 26 die spaltförmige Öffnung 36 der Gleitfläche 34 durchgreift. Je nachdem, von welcher Seite das zweite Kolben-Zylinderaggregat 70 mit Druck beaufschlagt und dadurch der Druckschuh 30 relativ zum Vorritzaggregat 44 verschoben wird, nimmt das Vorritz-Sägeblatt 46 entweder die in Figur 4 dargestellte Stellung ein, in der ein Vorritzen des Werkstückes 42 nicht möglich ist, oder aber das Vorritz-Sägeblatt 46 nimmt die in Figur 5 dargestellte Relativlage ein, in der es die spaltförmige Öffnung 36 entsprechend dem durch die Stellschraube 78 vorgegebenen Maße durchgreift und daher in das zu sägende Werkstück 42 eine Sägespur 59 einfräsen kann.

Vorritzaggregat 44 und Druckschuh 30 sind somit mittels der gemeinsamen Linearführung 52 relativ zum Gehäuse 18 und zu den Tragbügeln 20, 22 linear verschiebbar, und zusätzlich können Druckschuh 30 und Vorritzaggregat relativ zueinander linear verschoben werden, so dass eine gewünschte Eindringtiefe 84 eingestellt werden kann.

## Patentansprüche

1. Sägeaggregat für eine vertikale Plattensäge (10), mit mindestens einem Tragteil (20, 22) an dem ein drehend antreibbares Hauptsägeblatt (26) drehbar gelagert ist, und mit einem relativ zum Hauptsägeblatt versetzbaren, drehend antreibbaren Vorritz-Sägeblatt (46) sowie mit einem an das zu sägende Werkstück gleitend anlegbaren Druckschuh (30), der eine spaltförmige Öffnung (36) zum Durchtritt des Hauptsägeblattes und des Vorritz-Sägeblattes aufweist und der relativ zum Tragteil verschiebbar ist, **dadurch gekennzeichnet, dass** das Vorritz-Sägeblatt (46) zusammen mit dem Druckschuh (30) mittels einer gemeinsamen Linearführung (52) linear verschiebbar am Tragteil (20, 22) gehalten ist.

2. Sägeaggregat nach Anspruch 1, **dadurch gekennzeichnet, dass** der Druckschuh (30) relativ zum Vorritz-Sägeblatt (46) bewegbar ist.

3. Sägeaggregat nach Anspruch 1 oder 2, **dadurch gekennzeichnet, dass** der Druckschuh (30) relativ zum Vorritz-Sägeblatt (46) linear verschiebbar ist.

4. Sägeaggregat nach einem der voranstehenden Ansprüche, **dadurch gekennzeichnet, dass** die gemeinsame Linearführung (52) eine Führungsschiene (58) und mindestens einen komplementär zur Führungsschiene (58) ausgestalteten Führungsschuh (54, 56) aufweist.

5. Sägeaggregat nach einem der voranstehenden Ansprüche, **dadurch gekennzeichnet, dass** das Sägeaggregat (16) ein erstes Antriebsorgan (60) aufweist zum Verschieben des Vorritz-Sägeblattes (46) zusammen mit dem Druckschuh (30) relativ zum Tragteil (20, 22).

6. Sägeaggregat nach Anspruch 5, **dadurch gekennzeichnet, dass** das erste Antriebsorgan ein Kolben-Zylinderaggregat (60) aufweist.

7. Sägeaggregat nach einem der Ansprüche 2 bis 6, **dadurch gekennzeichnet, dass** das Sägeaggregat (16) ein zweites Antriebsorgan (70) aufweist zum Bewegen des Druckschuhs (30) relativ zum Vorritz-Sägeblatt (46).

8. Sägeaggregat nach Anspruch 7, **dadurch gekennzeichnet, dass** das zweite Antriebsorgan als Kolben-Zylinderaggregat (70) ausgestaltet ist.

9. Sägeaggregat nach einem der voranstehenden Ansprüche, **dadurch gekennzeichnet, dass** das Sägeaggregat (16) ein Stellorgan (78) aufweist zum Einstellen der Eindringtiefe (84) des Vorritz-Sägeblatt (46) in das zu sägende Werkstück (42).

10. Sägeaggregat nach Anspruch 9, **dadurch gekennzeichnet, dass** das Stellorgan (78) einen mechanisch verstellbaren Anschlag (82) umfasst.

11. Sägeaggregat nach Anspruch 10, **dadurch gekennzeichnet, dass** der Anschlag (82) auf der dem Werkstück (42) zugewandten Seite des Sägeaggregats (18) manuell verstellbar ist.

12. Sägeaggregat nach einem der voranstehenden Ansprüche, **dadurch gekennzeichnet, dass** das Hauptsägeblatt (26) und das Vorritz-Sägeblatt (46) mittels separater Elektromotoren antreibbar sind.

13. Sägeaggregat nach einem der voranstehenden Ansprüche, **dadurch gekennzeichnet, dass** das Sägeaggregat (16) ein Vorritzaggregat (44) umfasst, das das Vorritz-Sägeblatt (46) sowie einen das Vorritz-Sägeblatt (46) drehend antreibenden Elektromotor (48) aufweist, wobei das Vorritzaggregat (44) mittels der gemeinsamen Linearführung (52) zusammen mit dem Druckschuh (30) linear verschiebbar am Tragteil (20, 22) gehalten ist.

## Claims

1. Sawing unit for a vertical panel saw (10), with at least one supporting part (20, 22) on which a rotationally drivable main saw blade (26) is rotatably mounted, and with a rotationally drivable pre-scoring saw blade (46) which is displaceable relative to the main saw blade, and also with a pressure shoe (30) which is slidingly positionable against the workpiece to be sawn, the pressure shoe (30) comprising a slit-shaped opening (36) for passage of the main saw blade and the pre-scoring saw blade therethrough and being displaceable relative to the supporting part, **characterized in that** the pre-scoring saw blade (46) is held together with the pressure shoe (30) on the supporting part (20, 22) so as to be linearly displaceable by means of a common linear guide (52).

2. Sawing unit in accordance with claim 1, **characterized in that** the pressure shoe (30) is movable relative to the pre-scoring saw blade (46).

3. Sawing unit in accordance with claim 1 or 2, **characterized in that** the pressure shoe (30) is linearly displaceable relative to the pre-scoring saw blade (46).

4. Sawing unit in accordance with any one of the preceding claims, **characterized in that** the common linear guide (52) comprises a guide rail (58) and at least one guide shoe (54, 56) which is configured so as to be complementary to the guide rail (58).

5. Sawing unit in accordance with any one of the preceding claims, **characterized in that** the sawing unit (16) comprises a first drive element (60) for displacing the pre-scoring saw blade (46) together with the pressure shoe (30) relative to the supporting part (20, 22).

6. Sawing unit in accordance with claim 5, **characterized in that** the first drive element comprises a piston-cylinder unit (60).

7. Sawing unit in accordance with any one of claims 2 to 6, **characterized in that** the sawing unit (16) comprises a second drive element (70) for moving the pressure shoe (30) relative to the pre-scoring saw blade (46).

8. Sawing unit in accordance with claim 7, **characterized in that** the second drive element is configured as a piston-cylinder unit (70).

9. Sawing unit in accordance with any one of the preceding claims, **characterized in that** the sawing unit (16) comprises a setting element (78) for setting the penetration depth (84) of the pre-scoring saw blade (46) into the workpiece (42) to be sawn.

10. Sawing unit in accordance with claim 9, **characterized in that** the setting element (78) comprises a mechanically adjustable stop (82).

11. Sawing unit in accordance with claim 10, **characterized in that** the stop (82) is manually adjustable on the side of the sawing unit (18) that faces the workpiece (42).

12. Sawing unit in accordance with any one of the preceding claims, **characterized in that** the main saw blade (26) and the pre-scoring saw blade (46) are drivable by separate electric motors.

13. Sawing unit in accordance with any one of the preceding claims, **characterized in that** the sawing unit (16) comprises a pre-scoring unit (44) which comprises the pre-scoring saw blade (46) and an electric motor (48) rotationally driving the pre-scoring saw blade (46), the pre-scoring unit (44) being held together with the pressure shoe (30) on the supporting part (20, 22) so as to be linearly displaceable by means of the common linear guide (52).

## Revendications

1. Unité de sciage pour scie pour plaques verticale (10), ladite unité de sciage comportant au moins une pièce de support (20, 22) sur laquelle une lame de scie principale (26) entraînée en rotation est montée de manière à pouvoir tourner, et une lame de scie à pré-entailler (46) entraînée en rotation et déplaçable par rapport à la lame de scie principale ainsi qu'un sabot de compression (30) qui peut être monté de façon à coulisser sur la pièce à scier, qui comporte une ouverture (36) en forme de fente destinée à laisser passer la lame de scie principale et la lame de scie à pré-entailler et qui peut être déplacé par rapport à la pièce de support, **caractérisée en ce que** la lame de scie à pré-entailler est maintenue conjointement avec le sabot de compression (30) sur la pièce de support (20, 22) de manière à pouvoir se déplacer linéairement au moyen d'un guide linéaire commun (52).

2. Unité de sciage selon la revendication 1, **caractérisée en ce que** le sabot de compression (30) est mobile par rapport à la lame de scie à pré-entailler (46).

3. Unité de sciage selon la revendication 1 ou 2, **caractérisée en ce que** le sabot de compression (30) peut se déplacer linéairement par rapport à la lame de scie à pré-entailler (46).

4. Unité de sciage selon l'une des revendications précédentes, **caractérisée en ce que** le guide linéaire commun (52) comporte un rail de guidage (58) et au moins un sabot de guidage (54, 56) de conformation complémentaire du rail de guidage (58).

5. Unité de sciage selon l'une des revendications précédentes, **caractérisée en ce que** l'unité de sciage (16) comporte un premier organe d'entraînement (60) destiné à déplacer la lame de scie à pré-entailler (46) conjointement avec le sabot de compression (30) par rapport à la pièce de support (20, 22).

6. Unité de sciage selon la revendication 5, **caractérisée en ce que** le premier organe d'entraînement comporte une unité à piston et cylindre (60).

7. Unité de sciage selon l'une des revendications 2 à 6, **caractérisée en ce que** l'unité de sciage (16) comporte un deuxième organe d'entraînement (70) destiné à déplacer le sabot de compression (30) par rapport à la lame de scie à pré-entailler (46).

8. Unité de sciage selon la revendication 7, **caractérisée en ce que** le deuxième organe d'entraînement est conformé en unité à piston et cylindre (70).

9. Unité de sciage selon l'une des revendications précédentes, **caractérisée en ce que** l'unité de sciage (16) comporte un actionneur (78) pour régler la profondeur de pénétration (84) de la lame de scie à pré-entailler (46) dans la pièce à scier (42).

10. Unité de sciage selon la revendication 9, **caractérisée en ce que** l'actionneur (78) comporte une butée (82) réglable mécaniquement.

11. Unité de sciage selon la revendication 10, **caractérisée en ce que** la butée (89) est réglable manuellement du côté de l'unité de sciage (18) qui est dirigé vers la pièce (42).

12. Unité de sciage selon l'une des revendications précédentes, **caractérisée en ce que** la lame de scie principale (26) et la lame de scie à pré-entailler (46) peuvent être entraînées au moyen de moteurs électriques séparés.

13. Unité de sciage selon l'une des revendications précédentes, **caractérisée en ce que** l'unité de sciage (16) comporte une unité à pré-entailler (44) qui comporte la lame de scie à pré-entailler (46) ainsi qu'un moteur électrique (48) entraînant en rotation la lame de scie à pré-entailler (46), l'unité à pré-entailler (44) étant maintenue conjointement avec le sabot de compression (30) sur la pièce de support (20, 22) de façon à pouvoir se déplacer linéairement au moyen du guide linéaire commun (52).
